# EUROPÄISCHE PATENTSCHRIFT

(11) **EP 3 570 203 B1**
(45) Veröffentlichungstag und Bekanntmachung des Hinweises auf die Patenterteilung: **05.01.2022**
(21) Anmeldenummer: 19173994.5
(22) Anmeldetag: 13.05.2019
(51) Int. Cl.: H05B 47/19, G06K 19/077

(54) **LEUCHTE MIT TRANSPONDER FÜR PARAMETRIERUNG UND ADRESSIERUNG**
LAMP WITH TRANSPONDER FOR PARAMETERIZATION AND ADDRESSING
LUMINAIRE POURVU DE TRANSPONDEUR DESTINÉ AU PARAMÉTRAGE ET AU ADRESSAGE

(30) Priorität: 16.05.2018 DE 102018111711
(43) Veröffentlichungstag der Anmeldung: 20.11.2019
(73) Patentinhaber: Tridonic GmbH & Co. KG, 6851 Dornbirn (AT)
(72) Erfinder: Lochmann, Frank, 88147 Esseratsweiler (DE); Schertler, Markus, 6952 Hittisau (AT); Troppacher, Rainer, 6850 Dornbirn (AT)
(74) Vertreter: Beder, Jens

(56) Entgegenhaltungen:
- WO-A1-2007/141713
- WO-A1-2013/153522
- WO-A1-2015/025267
- WO-A1-2016/168659
- WO-A1-2017/140628
- US-A1- 2003 214 774
- US-A1- 2007 262 868
- US-A1- 2008 094 222
- US-A1- 2010 127 835

## Beschreibung

Die vorliegende Erfindung betrifft eine Leuchte mit einem Betriebsgerät, das Informationen für eine Parametrierung oder Adressierung des Betriebsgeräts von einem Kommunikationsgerät empfangen und/oder Informationen an das Kommunikationsgerät senden kann sowie ein Beleuchtungssystem mit einer solchen Leuchte.

Leuchten, insbesondere mit Leuchtdioden (LED) als Leuchtmittel, enthalten Betriebsgeräte, die den für das Leuchtmittel nötigen Strom bzw. die Betriebsspannung für das Leuchtmittel bereitstellen, die Funktion des Leuchtmittels überwachen und ein Dimmen oder Ändern der Lichtfarbe ermöglichen. Zusätzlich können Betriebsgeräte mit einem Netzwerk zur Steuerung von Komponenten eines Beleuchtungssystems verbindbar sein, über das sie Befehle für die Steuerung bzw. den Betrieb des Leuchtmittels empfangen und Statusmeldungen senden.

Die DE 10 2016 210 414 A1 offenbart ein Betriebsgerät, das einen Transponder aufweist, der im stromlosen Zustand des Betriebsgeräts die von einem Sendegerät übermittelten Konfigurationsinformationen empfangen und speichern kann und von dem die Steuerungseinrichtung des Betriebsgeräts die gespeicherten Informationen bei Inbetriebnahme des Betriebsgeräts ausliest. Dies ermöglicht eine Konfigurierung des Betriebsgeräts ohne das Beleuchtungssystem zuvor in Betrieb zu nehmen.

Der verwendete Transponder, ein NFC-Transponder oder ein auf der RFID-Technologie RFID (engl. radio-frequency identification) basierender NFC-Transponder, lässt jedoch nur sehr kurze Abstände zwischen Sender und Empfänger zu. Somit muss das Betriebsgerät vor dem Einbau in die Leuchte konfiguriert bzw. die Information vor oder beim Zusammenbau der Leuchte übertragen werden, wenn das meist metallische Gehäuse der Leuchte eine Übertragung stört oder der Abstand zwischen dem Transponder und der nächstliegenden Gehäuseaußenseite für eine Übertragung zu groß ist.

Ein LED-Retrofit-Leuchtmittel, das alle Merkmale gemäß dem Oberbegriff des beigefügten Anspruches 1 aufweist, ist in der WO 2013/153522 A1 beschrieben.

Der Erfindung liegt die Aufgabe zugrunde eine Leuchte und ein Beleuchtungssystem bereitzustellen, mit denen eine gute Signalverbindung bei der Übertragung in einfacher Weise möglich ist.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung weist eine Leuchte ein Gehäuse und zumindest ein in dem Gehäuse untergebrachtes und mit einem Transponder versehenes Betriebsgerät auf. Der Transponder hat eine erste Antenne und ist dazu ausgebildet, Signale von einem Kommunikationsgerät zu empfangen und/oder Signale an das Kommunikationsgerät zu senden. Zusätzlich ist an dem Gehäuse eine mit der ersten Antenne gekoppelte zweiten Antenne vorgesehen und dazu ausgebildet, von dem Kommunikationsgerät gesendete Signale für eine Weiterleitung mittels der Kopplung an die erste Antenne zu empfangen und/oder von dem Transponder über die erste Antenne gesendete und mittels der Kopplung erhaltene Signale an das Kommunikationsgerät zu senden. Die Kopplung ist eine Strahlungskopplung, eine induktive Kopplung oder eine kapazitive Kopplung, wobei die Leuchte für die Strahlungskopplung eine mit der zweiten Antenne über ein Kabel verbundene dritte Antenne aufweist, die dazu ausgebildet ist, die von der zweiten Antenne von dem Kommunikationsgerät empfangenen Signale an die erste Antenne zu senden und/oder die von der ersten Antenne gesendeten Signale zu empfangen, die Leuchte für die induktive Kopplung eine an der ersten Antenne angebrachte und mit der zweiten Antenne über ein Kabel verbundene Koppelspule aufweist bzw. die Leuchte für die kapazitive Kopplung einen an der ersten Antenne (10) angebrachten und mit der zweiten Antenne über ein Kabel verbundenen Kondensator aufweist, und das Kabel ein von dem Betriebsgerät ausgehendes Versorgungskabel für das Leuchtmittel ist.

Somit ist es nicht notwendig, das Betriebsgerät vor dem Zusammenbau der Leuchte zu konfigurieren oder das Gehäuse der Leuchte für eine Datenübertragung oder Abfrage zu öffnen.

Der Transponder kann ein RFID-Transponder oder ein NFC-Transponder sein.

Die zweite Antenne kann an einer Innenseite des Gehäuses, das zumindest teilweise aus einem nicht metallischem Material besteht, angebracht sein.

Alternativ kann die zweite Antenne an einer Außenseite des Gehäuses angebracht sein, wobei von der zweiten Antenne eine drahtgebundene Verbindung über das Kabel in das Gehäuseinnere besteht.

Das von dem Kommunikationsgerät gesendete Signal kann Informationen zur Konfiguration des Betriebsgeräts bzw. der Leuchte beinhalten, wobei der Transponder dazu ausgebildet ist, zumindest im ausgeschalteten Zustand des Betriebsgeräts die Informationen zu speichern und das Betriebsgerät dazu ausgebildet ist, die in dem Transponder gespeicherten Informationen zumindest nach dem Einschalten des Betriebsgeräts auszulesen.

Gemäß der vorliegenden Erfindung weist ein Beleuchtungssystem zumindest eine der beschriebenen Leuchten und zumindest ein Kommunikationsgerät auf, wobei das von dem Kommunikationsgerät gesendete Signal Informationen zur Adressierung der Leuchte in dem Beleuchtungssystem beinhaltet, der Transponder dazu ausgebildet ist, zumindest im ausgeschalteten Zustand des Betriebsgeräts die Informationen zu speichern, und das Betriebsgerät dazu ausgebildet ist, die in dem Transponder gespeicherten Informationen zumindest nach dem Einschalten des Betriebsgeräts auszulesen.

Nachfolgend wird die Erfindung anhand der beiliegenden Zeichnungen näher erläutert. Es zeigen:
Fig. 1 eine Schaltung einer Leuchte eines ersten und nichterfindungsgemäßen Beispiels zum Verständnis einer Strahlungskopplung der zweiten Antenne an das Betriebsgerät der Leuchte gemäß der vorliegenden Erfindung,
Fig. 2 die Leuchte des ersten Beispiels in einer Draufsicht,
Fig. 3 ein Ausführungsbeispiel der über ein Kabel verbundenen zweiten und dritten Antenne gemäß der vorliegenden Erfindung,
Fig. 4 eine Schaltung einer Leuchte eines zweiten und nichterfindungsgemäßen Beispiels zum Verständnis einer induktiven Kopplung der zweiten Antenne an das Betriebsgerät der Leuchte gemäß der vorliegenden Erfindung, und
Fig. 5 eine Schaltung einer Leuchte eines dritten und erfindungsgemäßen Beispiels zum Verständnis einer kapazitiven Kopplung der zweiten Antenne an das Betriebsgerät der Leuchte gemäß der vorliegenden Erfindung.

Komponenten mit gleichen Funktionen sind in den Figuren mit gleichen Bezugszeichen gekennzeichnet.

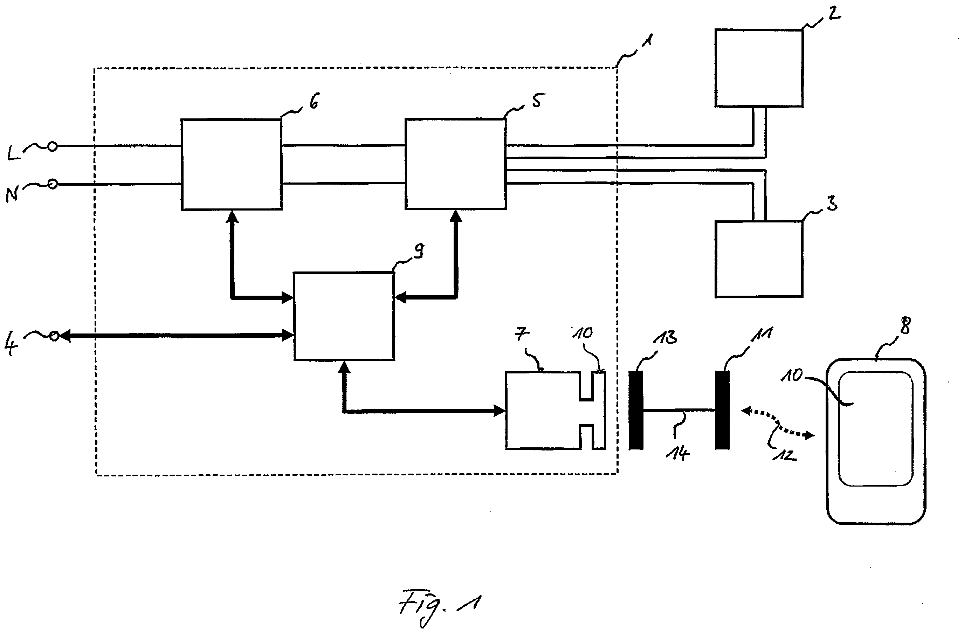

Fig. 1 zeigt eine vereinfachte Schaltung einer Leuchte mit einem Betriebsgerät 1 zum Betreiben zweier Leuchtmittel 2, 3. Die Leuchtmittel 2, 3 können Module sein, die mehrere in Serie und/oder parallel geschalteten Leuchtdioden (LED) aufweisen.

Die Leuchte bzw. das Betriebsgerät 1 ist über zwei Netzanschlüsse L, N mit der Netzspannung und über einen Datenanschluss 4 mit einem Datenbus verbindbar. Das Betriebsgerät 1 weist einen Gleichspannungswandler 5, der die für die Leuchtmittel 2, 3 nötigen Ströme/Spannungen erzeugt, eine Leistungsfaktorkorrekturschaltung 6, die die Netzspannung in eine Betriebsspannung für den Gleichspannungswandler 5 umwandelt und den Leistungsfaktor korrigiert, einen Transponder 7, der drahtlos Daten von einem externen Kommunikationsgerät 8 empfangen kann und eine Steuereinrichtung 9, die den Gleichspannungswandler 5 und die Leistungsfaktorkorrekturschaltung 6 steuert und Steuerbefehle und Konfigurierungsinformationen über den Datenanschluss 4 und den Transponder 7 senden und empfangen kann auf.

Das Kommunikationsgerät 8 ist nicht Bestandteil der Leuchte und dient dazu, die Steuereinrichtung 9 bzw. das Betriebsgerät 1 kontaktlos zu konfigurieren/parametrieren und Werte (Steuerdaten) und Ereignisse auszulesen. Das Kommunikationsgerät 8 weist eine Sende- und Empfangseinheit (nicht gezeigt) zum Senden und Empfangen von Daten, eine Anzeigeeinheit 10 zum Anzeigen der zu sendenden und/oder empfangenen Daten und eine Steuereinheit 10 (nicht gezeigt) auf.

Der Transponder 7 kann ein RFID-Transponder, insbesondere ein auf der RFID-Technologie basierender NFC-Transponder sein, der ein spezielles Kopplungsverfahren nutzt, dass auf gesonderte Frequenzbereiche und eine Kommunikation auf kurze Entfernung genormt ist, sein. Der Transponder 7 kann ein passiver Transponder sein, der von den empfangenen Signalen für eine Kommunikation mit Energie versorgt wird. In dem Transponder 7 können Daten in einem nicht flüchtigen, wiederbeschreibbaren Speicher gespeichert werden, die über die drahtlose Verbindung nur gelesen werden können (R/O) sowie Daten, die sowohl gelesen als auch überschrieben/geändert werden können (R/W).

Befindet sich das Betriebsgerät 1 jedoch im Gehäuse der Leuchte, so kann nicht immer sichergestellt werden, dass das Kommunikationsgerät 8 für eine Verbindung nahe genug an den Transponder 7 bzw. seine Antenne 10 herankommen kann oder dass die Verbindung nicht durch ein abschirmendes Gehäuse verhindert wird.

Gemäß der vorliegenden Erfindung ist für eine stabile Verbindung eine an dem Gehäuse angebrachte und mit der Antenne des Transponders 7 (erste Antenne) gekoppelte zweite Antenne 11 vorgesehen, die über eine drahtlose Verbindung 12 von dem Kommunikationsgerät 8 gesendete Signale für eine Weiterleitung an den Transponder 7 bzw. seine Antenne 10 empfängt und von dem Transponder 7 über dessen Antenne 10 gesendete Signale an das Kommunikationsgerät 8 sendet. Die zweite Antenne 11 kann an einer Außenseite des Gehäuses oder an einer strahlungsdurchlässigen Stelle, z.B. dem Lampenglas oder einem eingefügten Kunststofffenster, an einer Innenseite des Gehäuses angebracht werden.

In dem in Fig. 1 gezeigten Beispiel erfolgt die Kopplung der zweiten Antenne 11 mit der Antenne 10 des Transponders 7 entsprechend einer ersten Variante der vorliegenden Erfindung mittels einer dritten Antenne 13, die in Funkreichweite der Antenne 10 angeordnet und über ein Kabel 14 mit der zweiten Antenne 11 verbunden ist. Somit wird ein von dem Kommunikationsgerät 8 gesendetes und von der zweiten Antenne 11 empfangenes Signal über das Kabel 14 an die dritte Antenne 11 übermittelt, welche es an das Kommunikationsgerät 8 sendet. In ähnlicher Weise wird ein von der Antenne 10 gesendetes und von der dritten Antenne 13 empfangenes Signal über das Kabel 14 an die zweite Antenne 11 übermittelt, welche es an den Transponder 7 bzw. seine Antenne 10 sendet. Die zweite und dritte Antenne 11, 13 können auch drahtlos miteinander gekoppelt sein. Hierzu weist dann das Gehäuse ein für die verwendete Kopplungsart durchlässiges Fenster auf. Durch die Anordnung der zweiten Antenne auf der Außenseite ist dabei die Abstrahlcharakteristik gegenüber der Verwendung nur eines Fensters deutlich verbessert.

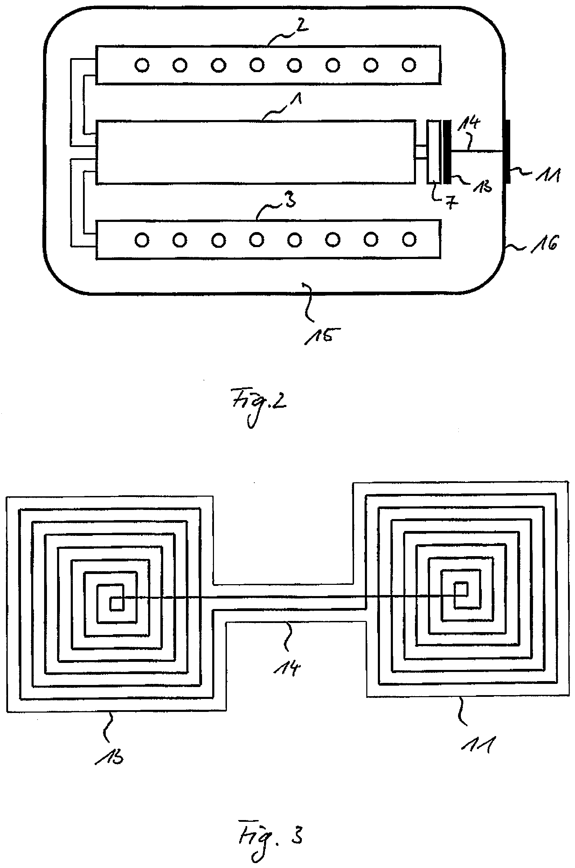

Fig. 2 zeigt die Leuchte 15 in einer Draufsicht mit abgenommenem Lampenglas/Abdeckung, in der das Betriebsgerät 1 zwischen den Leuchtmitteln 2, 3 (zwei streifenförmige LED-Module) angeordnet ist. Die zweite Antenne 11 ist an der Außenseite des Gehäuses 16 angebracht. Das von der zweiten Antenne 11 zu der dritten Antenne 13 führende Kabel 14 kann durch eine Öffnung (nicht gezeigt) in dem Gehäuse 16 oder, wenn das Kabel sehr flach ist, zwischen zwei Gehäuseteilen (Lampenglas und Unterteil/Geräteträger) in das Innere der Leuchte 15 geführt werden. Die zweite Antenne 11 kann auf die Außenseite des Gehäuses 16 und die dritte Antenne 13 auf den Transponder 7 bzw. seine Antenne 10 geklebt sein. Zwar ist in dem gezeigten Beispiel die zweite Antenne 11 auf einer Linie mit dem Transponder 7 angeordnet. Bei ausreichender Sendeleistung könnte hier also auch ein für die verwendeten Funkfrequenzen durchlässiges Fenster in dem Gehäuse 16 ausgebildet sein. Auf Grund von ästhetischen oder auch technischen Notwendigkeiten kann die zweite Antenne 11 jedoch auch an einer anderen Stelle ausgebildet sein. Damit ermöglicht die Erfindung eine flexible Anpassung der Position, die für ein Kommunikationsgerät 8 zugänglich sein muss, um Informationen auszutauschen.

Fig. 3 zeigt ein Ausführungsbeispiel der über das Kabel 14 verbundenen Antennen 11 und 13 gemäß der vorliegenden Erfindung. Die gezeigten Antennen 11 und 13 weisen jeweils einen spiralförmigen Draht auf und sind wie das sie verbindende Kabel sehr flach geformt.

Die Steuereinrichtung 9 kann mit dem Transponder 7 über einen seriellen Datenbus I²C (Inter-Integrated Circuit) verbunden sein und kann eine integrierte Halbleiterschaltung sein oder eine integrierte Halbleiterschaltung umfassen. Die Steuerungseinrichtung 6 kann als ein Prozessor, ein Mikroprozessor, ein Controller, ein Mikrocontroller oder eine anwendungsspezifische Spezialschaltung (ASIC) oder eine Kombination der genannten Einheiten ausgestaltet sein.

Über die drahtlose Verbindung 12 überträgt das Kommunikationsgerät 8 Daten für die Parametrierung/Konfiguration des Betriebsgeräts 1, welche im stromlosen Zustand des Betriebsgeräts 1 in einem Speicher (nicht gezeigt) des Transponders 7 abgespeichert und bei Inbetriebnahme von der Steuereinrichtung 9 ausgelesen werden. Nach der Inbetriebnahme oder während des Betriebs kann die Steuereinrichtung 9 die aktuell gesetzten Steuerdaten (Betriebsparameter) in dem Speicher des Transponders 10 abspeichern, welchen dann von dem Kommunikationsgerät 8 auslesbar sind.

Damit die Komponenten eines Beleuchtungssystems untereinander und/oder mit einer zentralen Steuereinheit während der Initialisierung und/oder des Betriebs Daten übertagen können, benötigt jede Komponente eine Netzwerkadresse. Diese Adresse kann gemäß der vorliegenden Erfindung auf einfache Weise vor der Inbetriebnahme der jeweiligen Leuchte 15 vergeben werden.

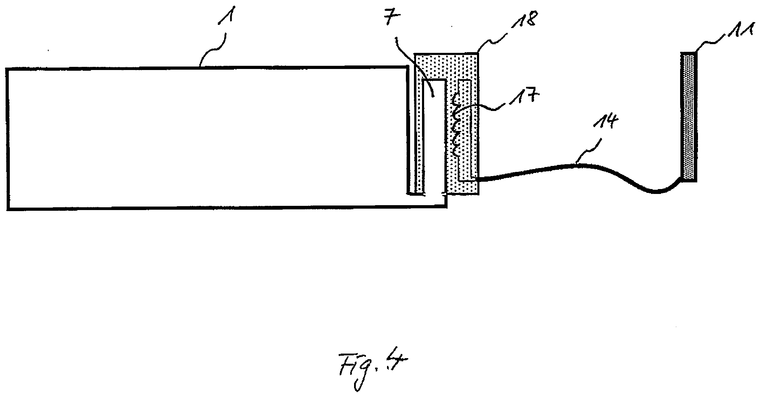

Fig. 4 zeigt ein Beispiel einer induktiven Kopplung der zweiten Antenne 11 an das Betriebsgerät 1 entsprechend einer zweiten Variante der vorliegenden Erfindung, bei dem das von dem Transponder 7 bzw. dessen Antenne 10 abgegebene Signal mit einer Koppelspule 17 aufgenommen und über das Kabel 14 an die zweite Antenne 11 übermittelt wird. In ähnlicher Weise überträgt die Koppelspule 17 das von der zweiten Antenne 11 empfangene Signal zum Transponder 7. Die Koppelspule 17 kann, wie in dem gezeigten Beispiel, in einem auf den Transponder 7 aufsteckbaren Schuh 18 oder einer entsprechenden Hülse mittels Spritzguss eingebettet sein.

In den in den Figuren bis 4 gezeigten Beispielen ist das Kabel 14 nichterfindungsgemäß ein in der Leuchte 15 zusätzlich verlegtes Kabel.

Erfindungsgemäß wird für die Ubertragung in der Leuchte 15 ein bereits vorhandenes Kabel, welches von dem Betriebsgerät 1 bzw. dem Gleichspannungswandler 5 zu einem der Leuchtmittel 2 führt, verwendet.

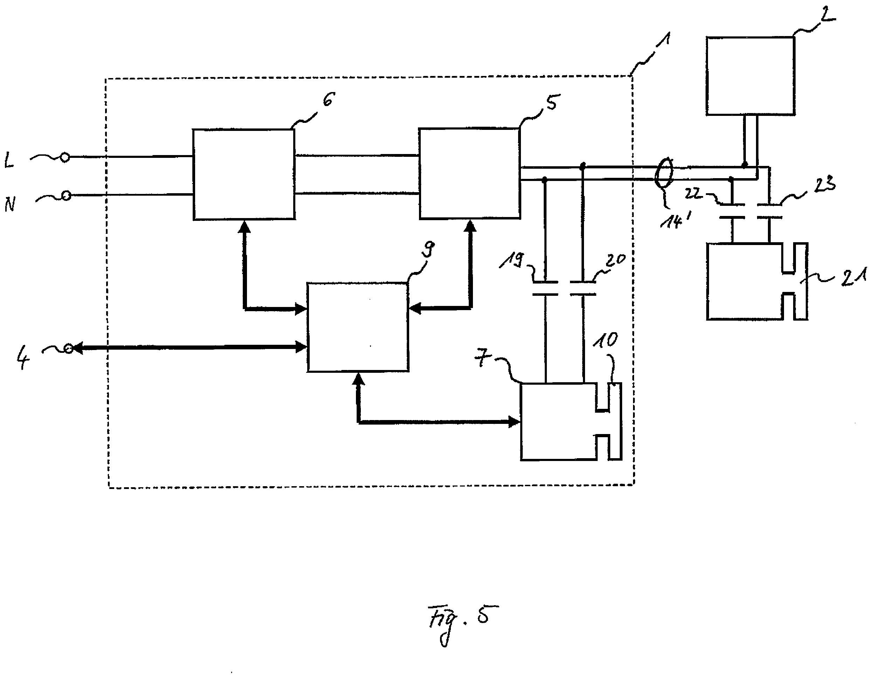

Eine solche Schaltung ist in Fig. 5 gezeigt, bei der jedoch die Ankopplung an das Kabel 14', im Gegensatz zu den gezeigten Beispielen und entsprechend einer dritten Variante der vorliegenden Erfindung, kapazitiv erfolgt. In der in Fig. 5 gezeigten Leuchte ist der Transponder 7 bzw. dessen Antenne 10 mit je einem Kondensator 19, 20 an das Kabel 14' und nichterfindungsgemäß ein zusätzlicher Transponder 21 oder erfindungsgemäß die Antenne 11 mit je einem Kondensator 22, 23 an das Kabel 14' kapazitiv angekoppelt.

## Patentansprüche

1. Leuchte aufweisend
ein Gehäuse (16), und
zumindest ein Betriebsgerät (1) zum Betreiben einer oder mehrerer Leuchtmittel (2, 3) der Leuchte (15), wobei das Betriebsgerät (1) in dem Gehäuse (16) untergebracht ist und einen Transponder (7) mit einer ersten Antenne (10) aufweist, der dazu ausgebildet ist, Signale von einem Kommunikationsgerät (8) zu empfangen und/oder Signale an das Kommunikationsgerät (8) zu senden,
**gekennzeichnet durch**
eine an dem Gehäuse (16) angebrachte und mit der ersten Antenne (10) gekoppelte zweite Antenne (11), die dazu ausgebildet ist, von dem Kommunikationsgerät (8) gesendete Signale für eine Weiterleitung mittels der Kopplung an die erste Antenne (10) zu empfangen und/oder von dem Transponder (7) über die erste Antenne (10) gesendete und mittels der Kopplung erhaltene Signale an das Kommunikationsgerät (8) zu senden, wobei
die Kopplung eine Strahlungskopplung, eine induktive Kopplung oder eine kapazitive Kopplung ist, wobei die Leuchte (15) für die Strahlungskopplung eine mit der zweiten Antenne (11) über ein Kabel (14) verbundene dritte Antenne (13) aufweist, die dazu ausgebildet ist, die von der zweiten Antenne (11) von dem Kommunikationsgerät (8) empfangenen Signale an die erste Antenne (10) zu senden und/oder die von der ersten Antenne (10) gesendeten Signale zu empfangen, die Leuchte (15) für die induktive Kopplung eine an der ersten Antenne (10) angebrachte und mit der zweiten Antenne (11) über ein Kabel verbundene Koppelspule (17) aufweist bzw. die Leuchte (15) für die kapazitive Kopplung einen an der ersten Antenne (10) angebrachten und mit der zweiten Antenne (11) über ein Kabel (14) verbundenen Kondensator (19, 20) aufweist, und
das Kabel (14) ein von dem Betriebsgerät (1) ausgehendes Versorgungskabel (14') für das Leuchtmittel (2, 3) ist.

2. Leuchte nach Anspruch 1, wobei
der Transponder (7) ein RFID-Transponder oder ein NFC-Transponder ist.

3. Leuchte nach Anspruch 1 oder 2, wobei
die zweite Antenne (11) an einer Innenseite des Gehäuses (16) angebracht ist, die zumindest teilweise aus einem nicht metallischen, nicht schirmenden Material besteht.

4. Leuchte nach Anspruch 1 oder 2, wobei
die zweite Antenne (11) an einer Außenseite des Gehäuses (16) angebracht ist.

5. Leuchte nach einem der Ansprüche 1 bis 4, wobei
das von dem Kommunikationsgerät (8) gesendete Signal Informationen zur Konfiguration des Betriebsgeräts (1) und/oder der Leuchte (15) beinhaltet,
der Transponder (7) dazu ausgebildet ist, zumindest in einem ausgeschalteten Zustand des Betriebsgeräts (1) die Informationen zu speichern; und
das Betriebsgerät (1) dazu ausgebildet ist, die in dem Transponder (10) gespeicherten Information zumindest nach einem Einschalten des Betriebsgeräts (1) auszulesen.

6. Beleuchtungssystem mit zumindest einer Leuchte (15) nach einem der Ansprüche 1 bis 5 und zumindest einem Kommunikationsgerät (8), wobei
das von dem Kommunikationsgerät (8) gesendete Signal Informationen zur Adressierung der Leuchte (15) in dem Beleuchtungssystem beinhaltet,
der Transponder (7) dazu ausgebildet ist, zumindest in einem ausgeschalteten Zustand des Betriebsgeräts (1) die Informationen zu speichern; und
das Betriebsgerät (1) dazu ausgebildet ist, die in dem Transponder (7) gespeicherten Information zumindest nach einem Einschalten des Betriebsgeräts (1) auszulesen.

## Claims

1. Luminaire comprising
a housing (16), and
at least one operating device (1) for operating one or more lamps (2, 3) of the luminaire (15), wherein the operating device (1) is accommodated within the housing (16) and has a transponder (7) with a first antenna (10), which transponder (7) is designed to receive signals from a communication device (8) and/or to transmit signals to the communication device (8),
**characterized by**
a second antenna (11) which is mounted on the housing (16) and coupled to the first antenna (10), which second antenna (11) is designed to receive signals transmitted by the communication device (8) for forwarding to the first antenna (10) by means of the coupling, and/or to transmit to the communication device (8) signals transmitted by the transponder (7) via the first antenna (10) and obtained by means of the coupling, wherein
the coupling is a radiation coupling, an inductive coupling, or a capacitive coupling, wherein for the radiation coupling the luminaire (15) has a third antenna (13) connected to the second antenna (11) via a cable (14), which third antenna (13) is designed to transmit to the first antenna (10) the signals received by the second antenna (11) from the communication device (8), and/or to receive the signals transmitted by the first antenna (10); for the inductive coupling the luminaire (15) has a coupling coil (17) which is mounted on the first antenna (10) and connected to the second antenna (11) via a cable; or, for the capacitive coupling, the luminaire (15) has a capacitor (19, 20) which is mounted on the first antenna (10) and is connected to the second antenna (11) via a cable (14), and
the cable (14) is a supply cable (14') for the lamp (2, 3), said supply cable (14') leading out from the operating device (1).

2. Luminaire according to Claim 1, wherein
the transponder (7) is an RFID transponder or an NFC transponder.

3. Luminaire according to Claims 1 or 2, wherein
the second antenna (11) is attached to an inner side of the housing (16), which consists at least partially of a non-metallic, non-shielding material.

4. Luminaire according to Claims 1 or 2, wherein
the second antenna (11) is attached to an outer side of the housing (16).

5. Luminaire according to any one of Claims 1 to 4, wherein
the signal transmitted by the communication device (8) contains information regarding the configuration of the operating device (1) and/or of the luminaire (15),
the transponder (7) is designed to store the information, at least in a switched-off state of the operating device (1); and
the operating device (1) is designed to read out the information stored in the transponder (10), at least after the operating device (1) has been switched on.

6. Lighting system comprising at least one luminaire (15) according to any one of Claims 1 to 5 and at least one communication device (8), wherein
the signal transmitted by the communication device (8) includes information for addressing the luminaire (15) in the lighting system,
the transponder (7) is designed to store the information, at least in a switched-off state of the operating device (1); and
the operating device (1) is designed to read out the information stored in the transponder (7), at least after the operating device (1) has been switched on.

## Revendications

1. Luminaire comportant
un boîtier (16) et
au moins un appareil de commande (1) permettant de commander un ou plusieurs moyens d'éclairage (2, 3) du luminaire (15), dans lequel l'appareil de commande (1) est logé dans le boîtier (16) et présente un transpondeur (7) doté d'une première antenne (10), lequel est conçu pour recevoir des signaux d'un appareil de communication (8) et/ou pour envoyer des signaux à l'appareil de communication (8), **caractérisé par**
une deuxième antenne (11) logée sur le boîtier (16) et couplée à la première antenne (10), laquelle est conçue pour recevoir les signaux envoyés par l'appareil de communication (8) pour une transmission au moyen du couplage avec la première antenne (10) et/ou pour envoyer à l'appareil de communication (8) les signaux envoyés par le transpondeur (7) par le biais de la première antenne (10) et obtenus au moyen du couplage, dans lequel
le couplage est un couplage de rayonnement, un couplage inductif ou un couplage capacitif, dans lequel le luminaire (15) présente, pour le couplage de rayonnement, une troisième antenne (13) reliée à la deuxième antenne (11) par le biais d'un câble (14), laquelle est conçue pour envoyer les signaux reçus par la deuxième antenne (11) de l'appareil de communication (8) à la première antenne (10) et/ou pour recevoir les signaux envoyés par la première antenne (10), le luminaire (15) présente, pour le couplage inductif, une bobine de couplage (17) montée sur la première antenne (10) et reliée à la deuxième antenne (11) par le biais d'un câble ou le luminaire (15) présente, pour le couplage capacitif, un condensateur (19, 20) monté sur la première antenne (10) et relié à la deuxième antenne (11) par le biais d'un câble (14) et
le câble (14) est un câble d'alimentation (14') pour le moyen d'éclairage (2, 3) sortant de l'appareil de commande (1).

2. Luminaire selon la revendication 1, dans lequel
le transpondeur (7) est un transpondeur RFID ou un transpondeur NFC.

3. Luminaire selon la revendication 1 ou 2, dans lequel
la deuxième antenne (11) est montée sur un côté interne du boîtier (16), lequel est au moins partiellement constitué d'un matériau non métallique non protecteur.

4. Luminaire selon la revendication 1 ou 2, dans lequel
la deuxième antenne (11) est montée sur un côté externe du boîtier (16).

5. Luminaire selon l'une quelconque des revendications 1 à 4, dans lequel
le signal envoyé par l'appareil de communication (8) contient des informations de configuration de l'appareil de commande (1) et/ou du luminaire (15),
le transpondeur (7) est conçu pour mémoriser les informations au moins dans un état éteint de l'appareil de commande (1) ; et
l'appareil de commande (1) est conçu pour lire les informations mémorisées dans le transpondeur (10) au moins après la mise en marche de l'appareil de commande (1).

6. Système d'éclairage comportant au moins un luminaire (15) selon l'une quelconque des revendications 1 à 5 et au moins un appareil de communication (8), dans lequel
le signal envoyé par l'appareil de communication (8) contient des informations d'adressage du luminaire (15) dans le système d'éclairage,
le transpondeur (7) est conçu pour mémoriser les informations au moins dans un état éteint de l'appareil de commande (1) ; et
l'appareil de commande (1) est conçu pour lire les informations mémorisées dans le transpondeur (7) au moins après la mise en marche de l'appareil de commande (1).
